# EUROPÄISCHE PATENTSCHRIFT

(11) **EP 0 699 888 B1**
(45) Veröffentlichungstag und Bekanntmachung des Hinweises auf die Patenterteilung: **24.10.2001**
(21) Anmeldenummer: 95111705.0
(22) Anmeldetag: 25.07.1995
(51) Int. Cl.: G01B 5/12, E21B 47/08, E02D 5/36

(54) **Bestimmung des Durchmessers oder der Wandstärke von Stütz- oder Wandelementen**
Determination of the diameter or wallthickness of wall elements
Détermination du diamètre ou de l'épaisseur d'éléments d'une paroi

(30) Priorität: 23.08.1994 DE 4429917
(43) Veröffentlichungstag der Anmeldung: 06.03.1996
(73) Patentinhaber: KELLER GRUNDBAU GmbH, 63067 Offenbach (DE)
(72) Erfinder: Raabe, Ernst-Werner, Dr.-Ing., D-44227 Dortmund (DE); Heiberger, Josef, Dipl.-Ing., D-77855 Achern-Mösbach (DE); Otterbein, Reiner, Dipl.-Ing., D-58093 Hagen (DE); Samol, Herbert, A-1237 Wien (AT)
(74) Vertreter: Zeitler & Dickel

(56) Entgegenhaltungen:
- EP-A- 0 452 044
- WO-A-87/03319
- DE-A- 1 803 736
- US-A- 2 854 758
- US-A- 4 251 921

## Beschreibung

Die Erfindung betrifft eine Vorrichtung zur Bestimmung des Durchmessers oder der Wandstärke von Stütz- oder Wandelementen gemäß dem Oberbegriff des Patentanspruchs 1.

Stütz- oder Wandelemente dieser Art werden hergestellt, indem ein Spülgestänge in ein vorher im Boden hergestelltes Bohrloch bis zum Bohrlochtiefsten eingeführt und der umliegende Boden mittels eines meist horizontalen Schneidstrahles aus Wasser oder Suspension aufgeschnitten und ausgefräst wird. Gleichzeitig mit dem Fräsen wird der gelöste Boden mit einer Suspension aus Bindemittel, beispielsweise Zement oder Ton-Zement, vermischt. Bei dieser intensiven Vermischung entsteht ein homogener, unter der Marke "Soilcrete" bekannter Bodenmörtel in Scheibenform oder - wenn das Spülgestänge vom Bohrlochtiefsten zur Oberfläche hochgezogen wird - in Säulenform.

Bei der Herstellung dieser Soilcrete-Körper ist es von wesentlicher Bedeutung, den Durchmesser bzw. die Wandstärke oder Reichweite der Körper möglichst exakt zu bestimmen, da hiervon die Anordnung der einzelnen Soilcrete-Elemente untereinander und die Menge des einzusetzenden Bindemittels abhängt. So steigt bei einer vorgegebenen Bindemittelmenge/m³ fertiger Soilcretemischung der Bindemittelgehalt bei kleinen Abmessungen und fällt bei großen Abmessungen. Ohne Kenntnis der genauen Abmessungen der Soilcrete-Körper kann somit einerseits zuviel Bindemittel zum Einsatz kommen und andererseits der Bindemittelgehalt zu gering sein, um die vorgegebenen Festigkeits- und/oder Dichtigkeitswerte zu erfüllen.

Zur Feststellung der tatsächlichen Abmessungen von Soilcrete-Körpern werden folgende Verfahren angewendet:
- Freilegung der Körper
- Kernbohrungen
- Stangenpegel zur akustischen Kontrolle beim Auftreffen des Düsenstrahls
- Massenbilanz
- Ultraschall-/Radarmessungen (WO-A-8 703 319)
- elektrische/elektromagnetische Messungen
- feste Kalibermessungen.

Nachteilig ist hierbei jedoch, daß diese bekannten Verfahren entweder nur sehr schwer und mit aufwendigen Mitteln durchführbar sind oder nur ungenaue Ergebnisse liefern.

Aus der US 4 251 921 ist ein Werkzeug zum Ausmessen eines Bohrloches mit ausschwenkbaren Tastarmen bekannt. Hierbei sind die Tastarme beidseitig mit einer Halteeinrichtung verbunden und umfassen zwischen dieser Verbindung ein Gelenk. Die Tastarme sind ständig mit einer diese ausklappenden Federkraft beaufschlagt. Diese Anordnung hat den Nachteil, daß sie relativ kompliziert ist und viele Schwenkgelenke aufweist, welche im Betrieb in einem Gemisch aus Bodenmasse, Flüssigkeit und Bindemittel sehr störanfällig wären. Die Schwenkarme sind ferner unter der Federkraft während der Ausmessung eines Bohrloches ständig ausgeklappt, so daß sie einem großen Verschleiß unterliegen. Auch sind lediglich Messungen von kleinen bis kleinsten Relativbewegungen der Tastarme im am Bohrlochumfang anliegenden Zustand möglich, was die Meßgenauigkeit erheblich verringert.

Aus der DE-OS 1 803 736 ist eine Sonde mit Gelenkarmen für Bohrlöcher bekannt, wobei Tastschuhe bzw. Gelenkarme mittels Blattfedern permanent unter Vorspannung gehalten und damit gegen eine Wandung eines Bohrloches gedrückt werden. Somit ergeben sich bezüglich der Meßgenauigkeit dieselben Nachteile wie bei dem zuvor beschriebenen bekannten Werkzeug. Die Sonde umfaßt zusätzlich eine hydraulische Rückzugsvorrichtung für die Schwenkarme. Diese dient jedoch lediglich für ein einfaches Einbringen der Vorrichtung in ein Bohrloch und hat während der Ausmessung des Bohrloches selbst keinerlei Funktion.

Der Erfindung liegt daher die Aufgabe zugrunde, eine Vorrichtng der gattungsgemäßen Art zur Verfügung zu stellen, die eine Messung auf einfache Weise und mit hoher Genauigkeit ermöglicht.

Erfindungsgemäß wird diese Aufgabe durch eine Vorrichtung der o.g. Art mit den Merkmalen des Patentanspruchs 1 gelöst. Vorteilhafte Ausführungsformen der Erfindung sind in den abhängigen Ansprüchen beschrieben.

Bei der erfindungsgemäßen Vorrichtung besteht das Meßgestänge aus Teleskoparmen, deren Elemente pneumatisch oder hydraulisch ausfahrbar sind.

Bei der Erfindung ist es somit wesentlich, ein mechanisches Meßgestänge durch den noch nicht ausgehärteten Bodenmörtel bis zu dessen Randbereich zu bewegen, wobei die hierzu erforderliche Kraft von einer entsprechend stark ausgebildeten Antriebseinrichtung ausgeübt wird. Da die das Bodenmörtelgemisch umgebenden Bodenschichten vom Flüssigkeitserosionsstrahl nicht aufgelockert oder aufgeweicht sind und entsprechend höhere Festigkeitswerte aufweisen, kann sich das Meßgestänge nicht über diesen Randbereich hinausbewegen. Das heißt mit anderen Worten, daß die das Bodenmörtelgemisch umgebenden Bodenbereiche für das Meßgestänge undurchdringbar sind, während andererseits die Kraft der Antriebseinrichtung so eingestellt ist, daß das Meßgestänge das noch nicht ausgehärtete Bodenmörtelgemisch durchdringen kann. Die Position des am Randbereich des Gemisches angelangten Meßgestänges wird über geeignete Meßverfahren, beispielsweise über Winkel- und Tiefenmessung, erfaßt und der Durchmesser oder die Wandstärke durch Vergleich mit der Ausgangsposition des Meßgestänges berechnet.

Mit Hilfe der erfindungsgemäßen Vorrichtung läßt sich somit der Durchmesser oder die Wandstärke der im Boden ausgebildeten Stütz- oder Wandelemente auf sehr einfache Weise und mit hoher Genauigkeit bestimmen.

Die Teleskoparme sind vorzugsweise senkrecht zur Längsachse der Halteeinrichtung angeordnet.

Bei Verwendung eines derartigen Meßgestänges wird die Ausfahrweite der Teleskoparme vorzugsweise über eine Seilzugeinrichtung oder über elektrische Widerstände bestimmt. Die Teleskoparme können weiterhin eine Seilzugvorrichtung aufweisen, mittels der sie nach erfolgter Messung in ihre verkürzte Ausgangslage zurückführbar sind. Alternativ hierzu ist es jedoch auch möglich, die Teleskoparme hydraulisch in ihre Ausgangslage zurückzuführen.

Die Teleskoparme eignen sich insbesondere zur punktuellen Messung, d.h. die Teleskoparme werden nach erfolgter Messung eingefahren, in vertikaler oder in Umfangsrichtung neu positioniert und anschließend wieder ausgefahren, um in der nächsten Meßrichtung oder Meßebene den Meßvorgang zu wiederholen. Gemäß einer Weiterbildung der Erfindung sind am Ende der Teleskoparme Räder befestigt, so daß die Teleskoparme beim Heben oder Drehen der Halteeinrichtung am Randbereich des Gemisches entlanggleiten können und eine kontinuierliche Messung durchgeführt werden kann.

Das Meßgestänge ist in vorteilhafter Weise zur Befestigung an dem zur Herstellung der Stütz- oder Wandelemente verwendeten Spülgestänge, vorzugsweise in dessen unterem Bereich, ausgebildet. Alternativ hierzu kann das Meßgestänge an einer eigenen Halteeinrichtung angeordnet sein, die lediglich für Meßzwecke verwendet wird.

Ein problemloses Heben und Senken der Meßvorrichtung ist gewährleistet, wenn die Halteeinrichtung ein geschlitztes Führungsrohr aufweist, in das die Tastarme einschwenkbar sind. Im vollkommen eingeschwenkten Zustand der Tastarme stehen diese dabei nicht oder zumindest nicht wesentlich über den Außenumfang des geschlitzten Führungsrohrs vor, so daß sich eine kompakte Gesamtvorrichtung mit geringer Wandreibung ergibt. Für den Meßvorgang werden die Tastarme dagegen aus den Schlitzen des Führungsrohrs ausgefahren.

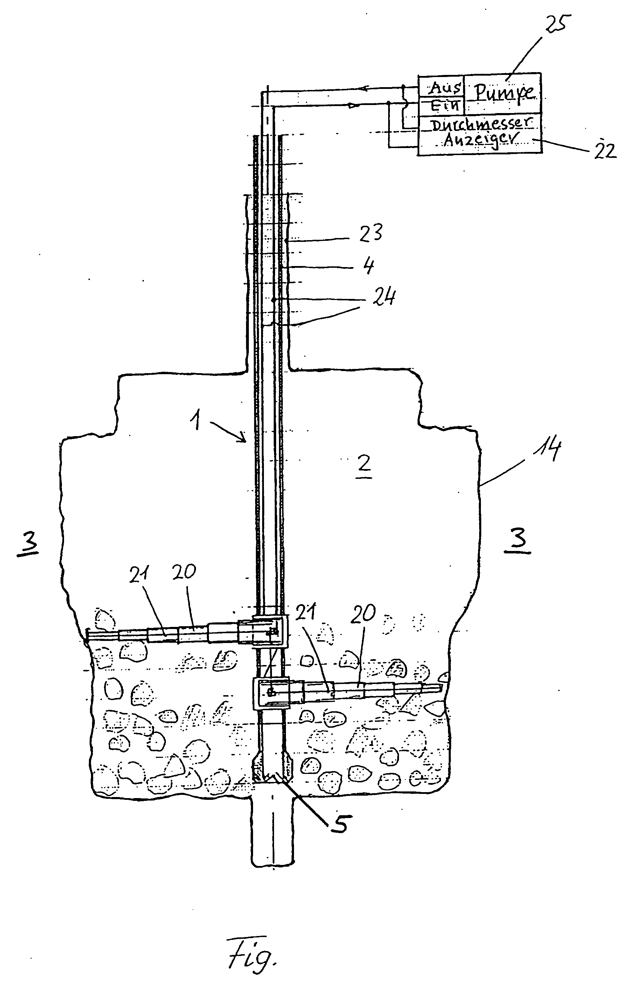

Die Erfindung wird nachfolgend anhand der Zeichnung näher erläutert. Diese zeigt in der einzigen Fig. die erfindungsgemäße Vorrichtung in teilweise geschnittener Seitenansicht.

Aus der einzigen Fig. ist ein Meßgerät 1 zur Bestimmung des Durchmessers eines Stützelements 2 ersichtlich, welches sich innerhalb des Bodens 3 befindet. Bei dem Stützelement 2 handelt es sich um einen sog. Soilcrete-Körper in der Form einer Säule, die im Boden 3 durch Auffräsen und Auflockern von Bodenmasse mittels einer unter hohem Druck eingebrachten Flüssigkeit und durch Vermischen dieser Bodenmasse mit Bindemittel hergestellt worden ist. In dem in der einzigen Fig. gezeigten Zustand ist das Stützelement 2 noch nicht ausgehärtet und besteht aus einem breiigen Bodenmörtel, der eine wesentlich geringere Festigkeit aufweist als der umgebende Boden 3.

Das Meßgerät 1 weist eine rohrförmige Halteeinrichtung 4 auf, welche mittels einer nicht dargestellten Einrichtung bis zum unteren Ende des Stützelements 2 abgesenkt werden kann. Das Absenken wird hierbei durch eine Spülflüssigkeit unterstützt, die über am unteren Ende der Halteeinrichtung 4 vorgesehene Spülkanäle 5 in radialer Richtung und vertikal nach unten austritt. Die Spülkanäle 5 sind an nicht dargestellte Schlauchelemente angeschlossen, die innerhalb der Halteeinrichtung 4 geführt und mit einer auf der Bodenoberfläche stationierten Spülflüssigkeitsversorgungsquelle verbunden sind.

Senkrecht zur Längsachse des Meßgeräts 1 sind Teleskoparme 20 angeordnet. Nach dem Absenken des Meßgeräts 1 in das das Stützelement 2 bildende Gemisch werden die einzelnen Elemente der Teleskoparme 20 pneumatisch oder hydraulisch ausgefahren, bis sie an den Randbereich 14 anstoßen. Hierbei wird die Ausfahrweite der Teleskoparme 20 über eine Seilzugeinrichtung 21 oder über elektrische Widerstände bestimmt, hieraus der Durchmesser über eine nicht dargestellte Auswerteeinheit errechnet und registriert. Gleichzeitig kann der Durchmesser auch auf einem entsprechenden Sichtgerät 22 angezeigt werden.

Nach erfolgter Messung werden die Teleskoparme 20 über die Seilzugeinrichtung 21 oder über eine hiervon getrennte Seilzugvorrichtung bzw. hydraulisch zurückgefahren. Nach erneuter Positionierung kann in einer nächsten Meßrichtung oder Meßebene der Meßvorgang wiederholt werden.

Aus der einzigen Fig. ist weiterhin eine vertikale Bohrung 23 ersichtlich, durch die das Meßgerät 1 in das Stützelement 2 eingeschoben werden kann. Die Hydraulikversorgung der Teleskoparme 20 erfolgt über Hydraulikleitungen 24, die innerhalb der Halteeinrichtung 4 nach oben geführt sind und mit einer Pumpe 25 verbunden sind.

Es ist ohne weiteres möglich, statt einer Seilzugeinrichtung zur Messung der Ausfahrstrecke der Teleskoparme 20 eine elektrische Widerstandsmessung oder eine geeignete Ultraschall- oder Laserstrahleinrichtung vorzusehen.

Das beispielhaft beschriebene Meßgeräte kann sowohl an einer eigenen Halteeinrichtung 4 befestigt als auch in ein bestehendes Spülgestänge zur Herstellung der Stützelemente 2 eingebaut werden. In letzterem Fall wird das Meßgestänge 20 günstigerweise unmittelbar hinter dem Bohrmeißel (Spülkopf) angeordnet.

## Patentansprüche

1. Vorrichtung zur Bestimmung des Durchmessers oder der Wandstärke von Stütz- oder Wandelementen, die im Boden durch Auflockern von Bodenmasse mittels unter hohem Druck eingebrachter Flüssigkeit und durch gleichzeitiges Vermischen dieser Bodenmasse mit Bindemittel ausgebildet werden, wobei die Vorrichtung versehen ist mit einem Meßorgan (1), einer mit diesem verbundenen Auswerteeinheit und einer Halteeinrichtung (4), mittels der das Meßorgan (1) innerhalb des aushärtbaren Gemisches (2) aus Bodenmasse, Flüssigkeit und Bindemittel positionierbar ist, wobei das Meßorgan (1) aus einem den Randbereich (14) des Gemisches (2) mechanisch abtastenden Meßgestänge (20) besteht, wobei das Meßgestänge (20) an einem Ende mit der Halteeinrichtung (4) verbunden ist, wobei ein Antrieb vorgesehen ist, mittels dem ein freies Ende des Meßgestänges (20) bis zum Randbereich (14) des Gemisches bewegbar und wieder zurückziehbar ist
**dadurch gekennzeichnet,**
**daß** das Meßgestänge aus Teleskoparmen (20) besteht, deren Elemente pneumatisch oder hydraulisch ausfahrbar sind.

2. Vorrichtung nach Anspruch 1, **dadurch gekennzeichnet, daß** die Teleskoparme (20) senkrecht zur Längsachse der Halteeinrichtung (4) angeordnet sind.

3. Vorrichtung nach Anspruch 1 oder 2, **dadurch gekennzeichnet, daß** die Ausfahrweite der Teleskoparme (20) über eine Seilzugeinrichtung (21) oder über elektrische Widerstände bestimmbar sind.

4. Vorrichtung nach Anspruch 2 oder 3, **dadurch gekennzeichnet, daß** die Teleskoparme (20) mittels einer Seilzugvorrichtung oder hydraulisch zusammenziehbar sind.

5. Vorrichtung nach einem der Ansprüche 1 bis 4, **dadurch gekennzeichnet, daß** am Ende der Teleskoparme (20) Räder befestigt sind.

6. Vorrichtung nach einem der Ansprüche 1 bis 5, **dadurch gekennzeichnet, daß** das Meßgestänge (20) derart ausgebildet ist, daß es an einem zur Herstellung der Stütz- oder Wandelemente (2) verwendeten Spülgestänge, vorzugsweise in dessen unterem Endbereich, oder an einer eigenen Haltevorrichtung festlegbar ist.

7. Vorrichtung nach einem der Ansprüche 1 bis 6, **dadurch gekennzeichnet, daß** die Halteeinrichtung (4) bzw. das Spülgestänge am unteren Ende Spülkanäle (5) zum leichteren Einführen der Halteeinrichtung (4) bzw. des Spülgestänges in den Boden aufweist.

8. Vorrichtung nach einem der Ansprüche 1 bis 7, **dadurch gekennzeichnet, daß** die Halteeinrichtung (4) ein geschlitztes Führungsrohr aufweist, in das die einfahrbaren Teleskoparme (20) einschwenkbar sind.

## Claims

1. Device for determining the diameter or the wall thickness of supporting elements or wall elements formed in the ground by loosening soil by means of liquid introduced under high pressure and by simultaneous mixing of this soil with binding material, whereby the device is provided with a measuring organ (1), an evaluation unit connected thereto and a holding apparatus (4) by means of which the measuring organ (1) may be positioned within the settable mixture (2) of soil, liquid and binding material, whereby the measuring organ (1) comprises a measuring rod (20) mechanically sensing the edge region (14) of the mixture (2), whereby the measuring rod (20) is connected at one end to the holding apparatus (4), whereby a drive is provided, by means of which a free end of the measuring rod (20) may be moved to the edge region (14) of the mixture and withdrawn again, **characterised in that** the measuring rod comprises telescopic arms (20), whose elements are extensible pneumatically or hydraulically.

2. Device according to Claim 1, **characterised in that** the telescopic arms (20) are arranged perpendicular to the longitudinal axis of the holding apparatus (4).

3. Device according to Claim 1 or 2, **characterised in that** the extension distance of the telescopic arms (20) may be determined with a cable and pulley arrangement (21) or with electrical resistances.

4. Device according to Claim 2 or 3, **characterised in that** the telescopic arms (20) may be retracted by means of a cable and pulley arrangement or hydraulically.

5. Device according to one of the claims 1 to 4, **characterised in that** wheels are attached to the ends of the telescopic arms (20).

6. Device according to one of the claims 1 to 5, **characterised in that** the measuring rod (20) is so designed that it can be attached to a spraying rod used for making the supporting element or wall element (2), preferably in its lower end region, or to its own holding apparatus.

7. Device according to one of the claims 1 to 6, **characterised in that** the holding apparatus (4) or the spraying rod has at its lower end spraying channels (5) for simpler introduction of the holding apparatus (4) or the spraying rod into the ground.

8. Device according to one of the claims 1 to 7, **characterised in that** the holding apparatus (4) has a slotted guide tube into which the retractable telescopic arms (20) can be swung.

## Revendications

1. Dispositif pour déterminer le diamètre ou l'épaisseur d'éléments de soutènement ou de paroi, qui sont formés dans le sol par amollissement d'une masse de sol au moyen d'un liquide amené sous haute pression et par mélange simultané de cette masse de sol avec un liant, le dispositif étant muni d'un organe de mesure (1), d'une unité d'évaluation connectée à celui-ci, et d'un dispositif de support (4), au moyen duquel l'organe de mesure (1) peut être positionné à l'intérieur du mélange durcissable (2) de masse de sol, de liquide et de liant, l'organe de mesure (1) étant constitué d'un système de tiges de mesure (20) palpant mécaniquement la zone périphérique (14) du mélange (2), le système de tiges de mesure (20) étant relié à une extrémité au dispositif de support (4), dans lequel est prévu un mécanisme d'entraînement au moyen duquel une extrémité libre du système de tiges de mesure (20) peut être déplacée jusqu'à la zone périphérique (14) du mélange et de nouveau rétractée, **caractérisé en ce que** le système de tiges de mesure est constitué par des bras télescopiques (20) dont les éléments peuvent être déployés par action pneumatique ou hydraulique.

2. Dispositif selon la revendication 1, **caractérisé en ce que** les bras télescopiques (20) sont disposés perpendiculairement à l'axe longitudinal du dispositif de support (4).

3. Dispositif selon la revendication 1 ou la revendication 2, **caractérisé en ce que** les amplitudes de déploiement des bras télescopiques (20) peuvent être déterminées par un système à câble de transmission (21) ou par des résistances électriques.

4. Dispositif selon la revendication 2 ou la revendication 3, **caractérisé en ce que** les bras télescopiques (20) peuvent être rétractés au moyen d'un système à câble de transmission ou par action hydraulique.

5. Dispositif selon l'une quelconque des revendications 1 à 4, **caractérisé en ce que** des roues sont fixées aux extrémités des bras télescopiques.

6. Dispositif selon l'une quelconque des revendications 1 à 5, **caractérisé en ce que** le système de tiges de mesure (20) est formé de telle sorte qu'il peut être fixé à un système de tiges d'injection utilisé pour la réalisation des éléments (2) de soutènement ou de paroi, de préférence dans la région d'extrémité inférieure de celui-ci, ou bien à un dispositif de support qui lui est propre.

7. Dispositif selon l'une quelconque des revendications 1 à 6, **caractérisé en ce que** le dispositif de support (4) ou le système de tiges à injection respectivement présentent à l'extrémité inférieure des canaux d'écoulement rapide (5) destinés à une introduction plus facile dans le sol du dispositif de support (4) ou du système de tiges d'injection respectivement.

8. Dispositif selon l'une quelconque des revendications 1 à 7, **caractérisé en ce que** le dispositif de support (4) présente un tube de guidage fendu dans lequel les bras télescopiques rétractables (20) peuvent être introduits par pivotement.
